# EUROPÄISCHE PATENTSCHRIFT

(11) **EP 2 253 493 B1**
(45) Veröffentlichungstag und Bekanntmachung des Hinweises auf die Patenterteilung: **22.08.2012**
(21) Anmeldenummer: 10161875.9
(22) Anmeldetag: 04.05.2010
(51) Int. Cl.: B60H 1/00

(54) **Vorrichtung zur Beheizung des Innenraumes eines Kraftfahrzeuges**
Device for heating the interior of a motor vehicle
Dispositif de chauffage de l'espace intérieur d'un véhicule automobile

(30) Priorität: 18.05.2009 DE 102009021796
(43) Veröffentlichungstag der Anmeldung: 24.11.2010
(73) Patentinhaber: Behr GmbH & Co. KG, 70469 Stuttgart (DE)
(72) Erfinder: Kohl, Michael, 74321, Bietigheim (DE); Viehrig, Falk, 71069, Sindelfingen (DE); Walter, Christoph, 70469, Stuttgart (DE); Getto, Oliver, 70567, Stuttgart (DE); Traub, Matthias, 70825, Korntal-Münchingen (DE); Holzer, Stefan, 71287, Weissach (DE); Sabatta, Vincenzo, 71254, Ditzingen (DE)
(74) Vertreter: Grauel, Andreas

(56) Entgegenhaltungen:
- EP-A2- 0 838 641
- DE-A1- 10 001 628
- DE-A1-102007 022 859
- DE-A1-102008 055 624
- US-A- 5 529 116

## Beschreibung

Die Erfindung betrifft eine Vorrichtung zur Beheizung des Innenraumes eines eine Brennkraftmaschine aufweisenden Kraftfahrzeuges nach dem Oberbegriff des Patentanspruches 1, und wie offenbart in DE 10 2007 022 859 A1.

Bekannte Vorrichtungen zur Beheizung von Kraftfahrzeugen umfassen einen Heizkörper, welcher in einem Gehäuse einer Heizungs- oder Klimaanlage angeordnet ist und von Luft durchströmt wird. Die erwärmte Luft wird dem Innenraum des Kraftfahrzeuges zugeführt. Der Heizkörper weist einen Rohr-Rippen-Block auf, wobei die Rohre vom Kühlmittel des Kühlkreislaufes der Brennkraftmaschine durchströmt werden. Bei modernen Verbrennungsmotoren mit hohem thermischen Wirkungsgrad, insbesondere bei Dieselmotoren ist die Verlustwärme derart niedrig, dass sie vielfach für die Beheizung unzureichend ist. Daher werden vielfach elektrische Zusatzheizungen eingesetzt, welche sich in Luftströmungsrichtung hinter dem Heizkörper befinden und die Luft zusätzlich erwärmen. Die so genannten elektrischen Zuheizer erfordern zusätzlichen konstruktiven Aufwand und belasten das Bordnetz des Kraftfahrzeuges.

Ziel der Erfindung ist es, einen hocheffizienten Heizkörper bereitzustellen, welcher möglichst ohne elektrische Zusatzheizung auskommt und auch bei relativ geringer Abwärme des Verbrennungsmotors eine hinreichende Heizleistung erbringt.

Es ist bekannt, den Heizkörper einer Heizungsanlage für Kraftfahrzeuge im Gegenstrom zu betreiben, d. h. den Luft- und den Kühlmittelstrom im Gegenstrom zu führen. Damit kann eine höhere Heizleistung erzielt werden. Ein derartiger Heizkörper wurde durch die DE 44 31 107 C2 bekannt. Bei dem bekannten Gegenstrom-Heizkörper wird das Kühlmittel in einer oder mehreren Stufen von der Luftaustrittsseite in Richtung Lufteintrittsseite umgelenkt. Hiermit kann eine höhere Wärmeübertragungsleistung erzielt werden.

Durch die DE 10 2005 048 227 A1 der Anmelderin wurde ein Heizkörper mit Flachrohren bekannt, bei welchem das Kühlmittel im Kreuzgegenstrom zum Luftstrom geführt ist, d. h. es findet eine Umlenkung in der Tiefe in Richtung auf die Lufteintrittsseite statt.

Durch die ältere Anmeldung der Anmelderin mit dem amtlichen Aktenzeichen DE 10 2008 017 485.8 (internes Aktenzeichen der Anmelderin: 07-B-142-A) wurde ein Heizkörper für Kraftfahrzeuge mit Umlenkung des Kühlmittels sowohl in Breite als auch in der Tiefe bekannt.

Ausgehend von diesem Stand der Technik, ist es Aufgabe der vorliegenden Verbindung, eine Heizvorrichtung der eingangs genannten Art bezüglich ihrer Leistung weiter zu verbessern und eine hohe Flexibilität bei unterschiedlichen Leistungsanforderungen an die Heizvorrichtung zu erreichen.

Die Aufgabe der Erfindung wird durch die Merkmale des Patentanspruches **1** gelöst. Vorteilhafte Ausgestaltungen ergeben sich aus den Unteransprüchen.

Erfindungsgemäß ist vorgesehen, dass mindestens zwei Heizkörper in Luftströmungsrichtung und in Richtung der Kühlmittelströmung hintereinander geschaltet sind, wobei Luft- und Kühlmittelstrom vorzugsweise im Gegenstrom geführt werden. Durch diese Bauweise, d. h. die Verschaltung von mindestens zwei Heizkörpern zu einem Heizkörperaggregat erreicht man ein hohes Maß an Flexibilität, verbunden mit einer hohen Wärmeübertragungsleistung. Darüber hinaus ergeben sich Vorteile in der Fertigung, da teilweise die gleichen Heizkörper verwendet werden können. Zur Anpassung an unterschiedliche Leistungsanforderungen können jedoch auch unterschiedlich dimensionierte Heizkörper miteinander verschaltet werden.

Nach einer bevorzugten Ausführungsform erfolgt die Verschaltung auf der Kuhlmittelseite durch ein Überströmrohr, weiches den Austritt des ersten Heizkörpers mit dem Eintritt des zweiten Heizkörpers verbindet. Damit werden beide Heizkörper nacheinander vom Kühlmittel durchströmt. Durch diese einfache Maßnahme ist es möglich, Serienheizkörper für die erfindungsgemäße Verschaltung zu verwenden, wodurch die Fertigungskosten reduziert werden.

Nach einer weiteren bevorzugten Ausführungsform weist das Überströmrohr einen variablen Durchtrittsquerschnitt auf, sodass der Kühlmittelstrom an die Leistungsanforderungen angepasst werden kann, beispielsweise bei unterschiedlichen Motorisierungen des Kraftfahrzeuges. Der Durchtrittsquerschnitt des Überströmrohres kann beispielsweise durch Einsatz einer Blende verringert werden, wodurch sich geringere Volumenströme für das Kühlmittel ergeben.

Bevorzugt weisen die Heizkörper einen Rohr-Rippen-Block aufmit einem gelöteten Block aus Flachrohren und Wellrippen, wobei die Flachrohre bevorzugt als Zweikammerrohre ausgebildet sind und damit zwei diskrete Strömungskanäle aufweisen. Die Rohrenden sind mit Rohrböden verbunden. Die Rohrböden sind Teile von Kühlmittelkästen für den Ein- und austritt sowie die Umlenkung des Kühlmittels. Derartige Heizkörper weisen eine hohe Wärmeübertragungsleistung auf, insbesondere, wenn der Kühlmittelstrom zusätzlich mehrfach umgelenkt wird. Die Kühlmittelkästen bieten eine einfache Möglichkeit, das Überströmrohr am Heizkörper zu befestigen und abzudichten.

Nach einer bevorzugten Ausführungsform sind die Heizkörper direkt in Luftströmungsrichtung hintereinander angeordnet, d. h. ohne einen Abstand. Damit ergibt sich ein kompakter Block, d. h. ein Doppelheizkörper.

Nach anderen bevorzugten Ausführungsformen ist es jedoch auch möglich, die Heizkörper im Abstand zueinander anzuordnen, wobei dieser Abstand kühlmittelseitig durch das Überströmrohr überbrückt wird. Dabei können die Heizkörper die gleiche Lage oder Position oder auch eine unterschiedliche Lage, z. B. ein Heizkörper stehend und ein Heizkörper liegend, einnehmen. Eine solche differenzierte Anordnung kann aus Bauraumgründen notwendig erscheinen.

Zur Anpassung der Leistung der Heizkörper ergeben sich unterschiedliche Variationsmöglichkeiten, z. B. die Rippendichte, die Rohrteilung, die Stirnfläche und/oder die Rippentiefe. Insbesondere durch die Rippendichte kann auch der luftseitige Druckabfall durch die Heizkörper beeinflusst werden.

Ausführungsbeispiele der Erfindung sind in der Zeichnung dargestellt und werden im Folgenden näher erläutert, wobei sich weitere Merkmale und/oder Vorteile aus der Beschreibung und/oder Zeichnung ergeben können. Es zeigen
- Fig. 1: zwei verschaltete Heizkörper in 3-D-Darstellung,
- Fig. 1a: die verschalteten Heizkörper gemäß Fig. 1 in einer Ansicht von oben,
- Fig. 1b: ein Durchflussschema für das Kühlmittel,
- Fig. 2: ein Ausführungsbeispiel der Erfindung für zwei verschaltete Heizkörper in 3-D-Darstellung,
- Fig. 2a: eine Ansicht von oben auf die verschalteten Heizkörper,
- Fig. 2b: ein Durchflussschema für das Kühlmittel,
- Fig. 3: ein erstes Anordnungsschema für zwei miteinander verschaltete Heizkörper,
- Fig. 4: ein zweites Anordnungsschema,
- Fig. 5: ein drittes Anordnungsschema,
- Fig. 6: ein viertes Anordnungsschema,
- Fig. 7: ein fünftes Anordnungsschema,
- Fig. 8: ein sechstes Anordnungsschema und
- Fig. 9: ein siebtes Anordnungsschema.

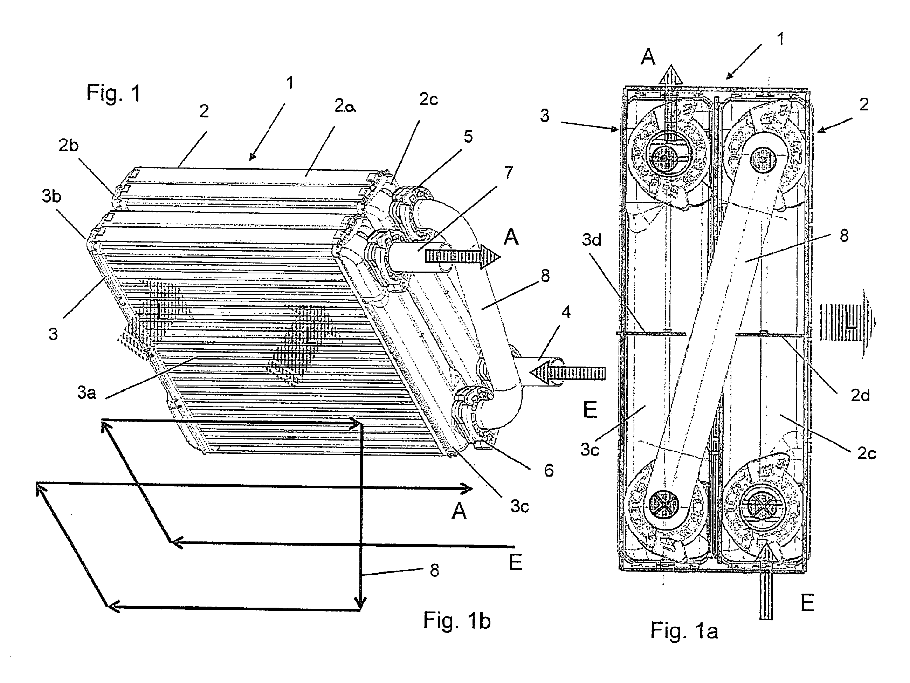

**Fig.1** zeigt eine Anordnung 1 von zwei miteinander verbundenen Heizkörpern 2, 3, welche sekundärseitig von Luft, dargestellt durch Pfeile L, durchströmt werden. In dem dargestellten Ausführungsbeispiel sind die Heizkörper 2, 3 im Wesentlichen gleich ausgebildet, d. h. sie weisen gleiche Rohr-Rippen-Blöcke 2a, 3a und Kühlmittelkästen 2b, 2c, 3b, 3c auf. Vorzugsweise umfassen die Rohr-Rippen-Blöcke 2a, 3a nicht näher dargestellte Flachrohre, zwischen denen nicht näher dargestellte Wellrippen angeordnet und mit den Flachrohren verlötet sind. Die beiden Heizkörper 2, 3 können beim dargestellten Ausführungsbeispiel gleiche Serienheizkörper sein. Der Heizkörper 2, welcher, bezogen auf die Luftströmung L, stromabwärts gelegen ist, weist einen Kühlmitteleintrittsstutzen 4, einen Kühlmittelaustrittsstutzen 5 und der Heizkörper 3 weist einen Kühlmitteleintrittsstutzen 6 sowie einen Kühlmittelaustrittsstutzen 7 auf. Der als Anschlussstutzen ausgebildete Kühlmittelaustritt 5 des Heizkörpers 1 ist mit dem als Anschlussstutzen ausgebildeten Eintrittsstutzen 6 durch ein Überströmrohr 8 verbunden. Die Heizkörper 2, 3 werden primärseitig von einem Kühlmittel eines nicht dargestellten Kühlmittelkreislaufes der Brennkraftmaschine eines Kraftfahrzeuges durchströmt. Das in den Eintrittsstutzen 4 eintretende Kühlmittel, Pfeil E, durchströmt somit beide Heizkörper nacheinander, zunächst den stromabwärts gelegenen Heizkörper 1 und anschließend den stromaufwärts gelegenen Heizkörper 3, aus dem es gemäß Pfeil A austritt. Die Heizkörper 2, 3 sind kühlmittelseitig hintereinander oder in Reihe geschaltet.
**Fig. 1a** zeigt die Anordnung 1, im Folgenden auch Heizkörperaggregat oder Doppelheizkörper 1 genannt, in einer Ansicht von oben, d. h. mit Blick auf das Überströmrohr 8. Der Kühlmitteleintritt und -austritt sind auch hier durch Pfeile E, A gekennzeichnet. Der obere Kühlmittelkasten 2c des Heizkörpers 2 weist eine Quertrennwand 2d, der obere Kühlmittelkasten 3c des Heizkörpers 3 weist eine Quertrennwand 3d auf. Das Kühlmittel wird somit im Heizkörper 2 einfach in der Breite umgelenkt, tritt dann über das Überströmrohr 8 in den zweiten Heizkörper 3 ein und wird dort ebenfalls einfach in der Breite umgelenkt. Die Strömungsrichtung ist in Fig. 1a durch Punktsymbole (in die Zeichenebene hinein) und Kreuzsymbole (aus der Zeichenebene heraus) schematisch dargestellt.
**Fig. 1b** zeigt den soeben beschriebenen Strömungsverlauf des Kühlmittels durch das Heizkörperaggregat 1 in einem durch Strömungspfeile dargestellten Schema, auch Strömungsmodell genannt. Ein- und Austritt des Kühlmittels sind mit E, A bezeichnet, die Strömung im Überströmrohr 8 ist durch einen Pfeil 8 gekennzeichnet. Ansonsten bedarf das Strömungsmodell keiner weiteren Erklärung.

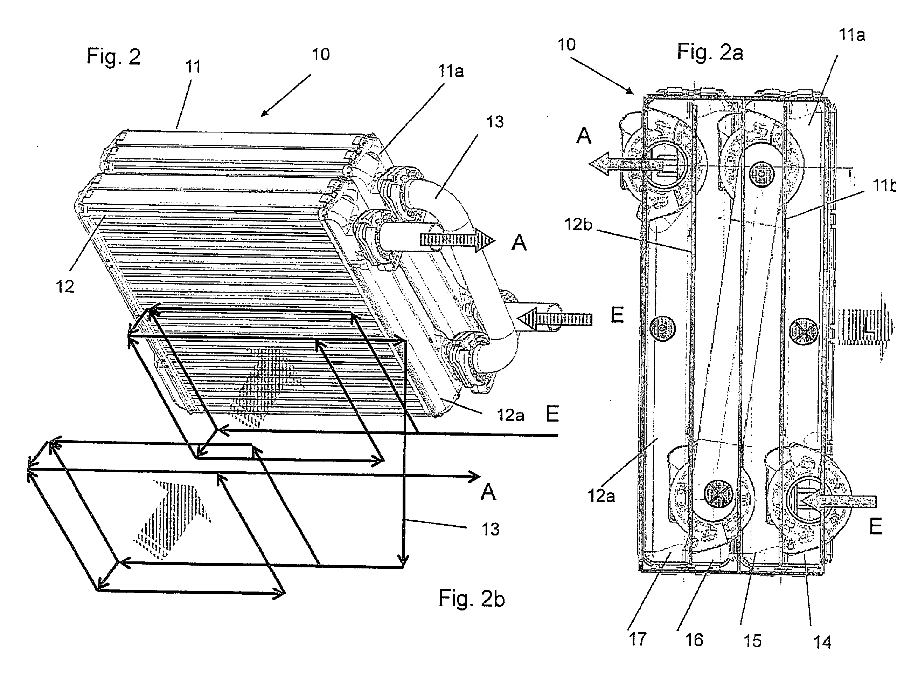

**Fig. 2** zeigt ein Ausführungsbeispiel der Erfindung für einen Doppelheizkörper 10, welcher zwei nebeneinander angeordnete Heizkörper 11, 12 umfasst, deren Rohr-Rippen-Blöcke (ohne Bezugszeichen) gleich wie in Fig. 1 aufgebaut sind, d. h. mit jeweils zwei Reihen von Flachrohren, die jeweils als Zweikammerrohre ausgebildet sind. Die kühlmittelseitige Verbindung der Heizkörper 11, 12 erfolgt - ähnlich wie in Fig. 1 - durch ein Überströmrohr 13. Der Eintritt des Kühlmittels ist durch einen Pfeil E, der Austritt durch einen Pfeil A gekennzeichnet.
**Fig. 2a** zeigt den Doppelheizkörper 10 in einer Ansicht von oben mit Kühlmitteleintritt E, Kühlmittelaustritt A und Luftströmungsrichtung L. Die oberen Kühlmittelkästen 11a, 12a der Heizkörper 11, 12 weisen jeweils Längstrennwände 11b, 12b auf. Der Doppelheizkörper 10 weist- wie bereits zu Fig. 2 erwähnt - vier Reihen von Strömungskanälen 14, 15,16, 17 auf, welche vom Kühlmittel entgegen der Luftströmungsrichtung L durchströmt werden, wobei die Punkt- und Kreuzsymbole die Strömungsrichtung des Kühlmittels in den Strömungskanalreihen 14, 15, 16, 17 angeben. Somit findet eine dreifache Umlenkung in der Tiefe statt, d. h. entgegen der Luftströmungsrichtung L, wobei die Strömung durch das Überströmrohr 13 ebenfalls als Umlenkung in der Tiefe mitgezählt ist.
**Fig. 2b** zeigt das entsprechende Strömungsmodell für die Kühlmittelströmung im Doppelheizkörper 10, wobei der Kühlmitteleintritt durch den Pfeil E, der Kühlmittelaustritt durch den Pfeil A und das Überströmrohr durch die Bezugszahl 13 gekennzeichnet ist. Ansonsten erklärt sich das Strömungsmodell von selbst.

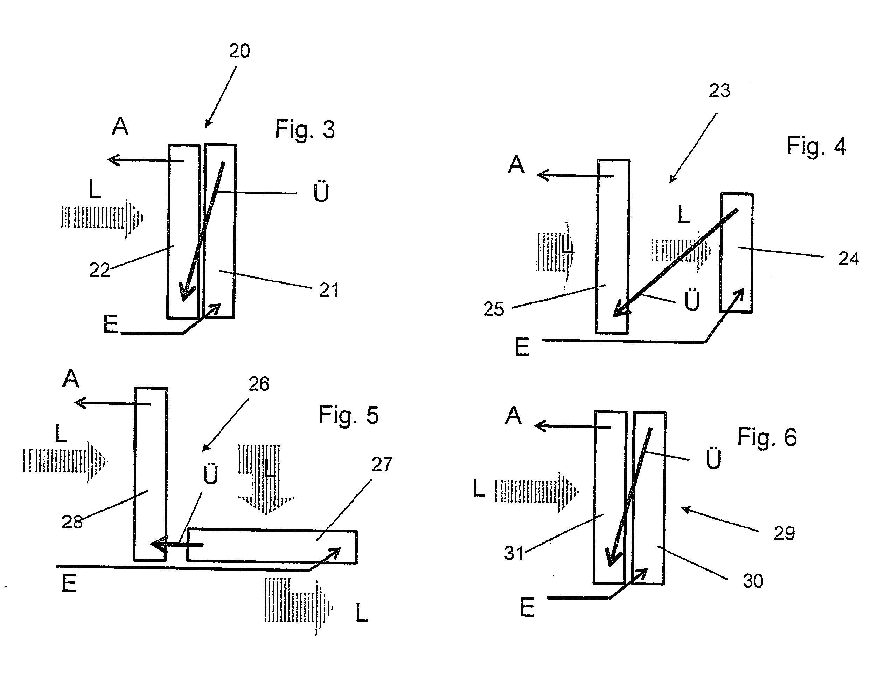

**Fig. 3** zeigt als weiteres Ausführungsbeispiel der Erfindung einen Doppelheizkörper 20, welcher zwei im Luftstrom L hintereinander angeordnete Heizkörper 21, 22 umfasst. Der Kühlmittelstrom, dargestellt durch einen Eintrittspfeil E, einen Überströmpfeil Ü und einen Austrittspfeil A, verläuft im Gegenstrom zum Luftstrom L, wobei das Kühlmittel zunächst in den stromabwärts gelegenen Heizkörper 21 eintritt, dann von diesem über eine Überströmleitung, dargestellt durch den Pfeil Ü, in den Heizkörper 22 übertritt. Beide Heizkörper 21, 22 sind in diesem Ausführungsbeispiel gleich dimensioniert, unter anderem gleiche Höhe, gleiche Tiefe, gleiche Stirnfläche und gleiche Rohr-Rippen-Blöcke.
**Fig. 4** zeigt ein weiteres Ausführungsbeispiel der Erfindung für eine Anordnung 23 von zwei ungleichen, im Abstand zueinander angeordneten Heizkörpern 24, 25. Die Luftströmungsrichtung ist durch Pfeile L, der Kühlmittelstrom ist durch die Pfeile E, Ü, A als Gegenstrom zum Luftstrom L dargestellt. Der im Luftstrom stromabwärts gelegenen Heizkörper 24 ist - wie die Darstellung zeit - in seiner Höhe kleiner als der Heizkörper 25. Dieses Ausführungsbeispiel zeigt eine der Variationsmöglichkeiten bei der Gestaltung der Heizkörperausbildung und Anordnung.
**Fig. 5** zeigt ein weiteres Ausführungsbeispiel der Erfindung für eine Anordnung 26 von zwei Heizkörpern 27, 28, welche im Windel zueinander angeordnet sind, d. h. der im Luftstrom stromabwärts gelegene Heizkörper 27 ist liegend und der stromaufwärts gelegene Heizkörper 28 ist stehend angeordnet. Der Luftstrom L wird entsprechend den Pfeilen L umgelenkt. Eine solche Anordnung kann sich beispielsweise aus baulichen Gründen ergeben.
**Fig. 6** zeigt ein weiteres Ausführungsbeispiel der Erfindung für eine Anordnung 29 von zwei Heizkörpern 30, 31, die zwar bezüglich ihrer äußeren Abmessungen, Höhe und Tiefe, gleich sind, jedoch eine unterschiedliche Rippendichte und/oder eine unterschiedliche Rohranzahl und/oder eine unterschiedliche Rohrteilung aufweisen. Damit weisen die beiden Heizkörper 30, 31 eine unterschiedliche Wärmeübertragungsleistung und/oder einen unterschiedlichen luftseitigen Druckabfall auf. Durch diese Variationsmöglichkeiten kann der Gesamtheizkörper bzw. das Heizkörperaggregat 29 in seiner Leistung feinstufig an die jeweilige Motorisierung des Kraftfahrzeuges angepasst werden.

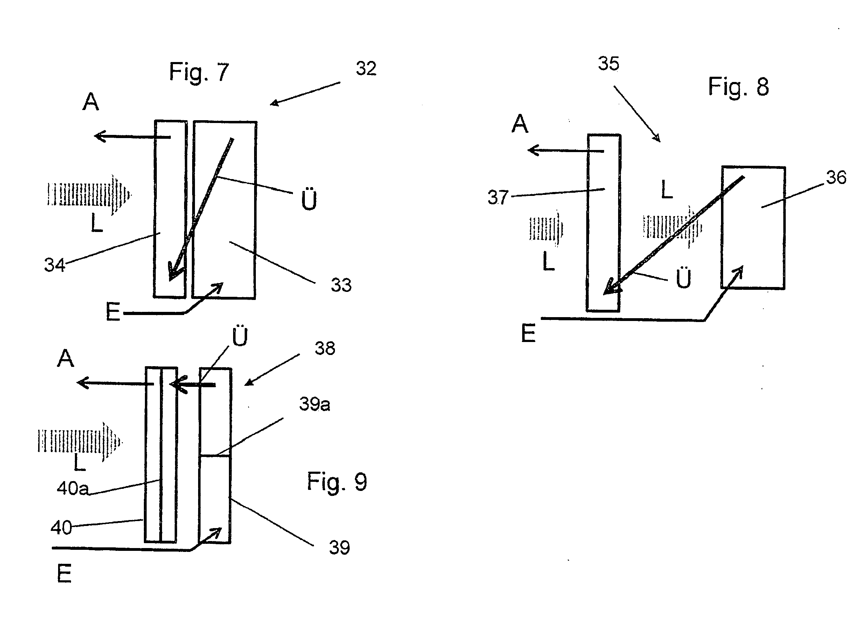

**Fig. 7** zeigt ein weiteres Ausführungsbeispiel der Erfindung für eine Anordnung 32 von zwei Heizkörpern 33, 34, wobei der im Luftstrom stromabwärts gelegene Heizkörper 33 eine größere Bautiefe als der vordere Heizkörper 34 aufweist. Der Kühlmittelstrom ist wiederum durch die Pfeile E, Ü, A gekennzeichnet.
**Fig. 8** zeigt eine weitere Kombinationsmöglichkeit, nämlich eine Anordnung 35 von zwei im Abstand zueinander angeordneten Heizkörpern 36, 37, wobei der im Luftstrom stromabwärts gelegene Heizkörper eine größere Bautiefe, jedoch eine geringere Stirnfläche als der vordere Heizkörper 37 aufweist.
**Fig. 9** zeigt ein weiteres Ausführungsbeispiel der Erfindung für eine Anordnung 38 von zwei Heizkörpern 39, 40, welche im Luftstrom L hintereinander und mit einem geringen Abstand zueinander angeordnet sind. Die Kühlmittelströmung durch beide Heizkörper 39, 40 ist wiederum durch Pfeile E, Ü, A gekennzeichnet. Der im Luftstrom stromabwärts gelegenen Heizkörper 39 weist eine Quertrennwand 39a, der im Luftstrom stromaufwärts gelegene Heizkörper 40 weist eine Längstrennwand 40a auf, sodass sich im Heizkörper 39 für das Kühlmittel eine Umlenkung in der Breite und für den Heizkörper 40 eine Umlenkung des Kühlmittels in der Tiefe ergibt. Durch diese Maßnahme wird bei in ihren äußeren Abmessungen gleichen Heizkörpern 39, 40 der Kühlmittelstrom beeinflusst: der Strömungsweg wird länger und der Volumenstrom wird kleiner. Daraus ergibt sich eine höhere Temperaturdifferenz zwischen der Kühlmitteleintritts- und -austrittsseite,

## Patentansprüche

1. Vorrichtung zur Beheizung des Innenraumes eines eine Brennkraftmaschine aufweisenden Kraftfahrzeuges, wobei die Vorrichtung mindestens einen in einer Heizungs- oder Klimaanlage angeordneten, primärseitig vom Kühlmittel der Brennkraftmaschin und sekundärseitig von Luft durchströmbaren Heizkörper aufweist, zwei Heizkörper (1, 10, 20, 23, 26, 29, 32, 35, 38) kohlmittelseitig und luftseitig hintereinander geschaltet sind, wobei die zwei Heizkörper (2, 3; 11, 12) einen Rohr-Rippen-Block (2a, 3a) und Kühlmittelkästen (2b, 2c, 3b, 3c) aufweisen, die Heizkörper einen oberen und einen unteren Kühlmittelkasten aufweisen wobei **dadurch gekennzeichnet, dass** im oberen Kühlmittelkasten jeweils eine Längstrennwand vorgesehen ist, so dass vier Reihen von Strömungskanälen gebildet sind und eine dreifache Umlenkung des Kühlmittels entgegen der Luftsträmungsrichtung, zwischen dem Kühlmitteleintritt und dem Kühlmittelaustritt erfolgt.

2. Vorrichtung nach Anspruch 1, **dadurch gekennzeichnet, dass** der Kühlmittelstrom (E, A) und der Luftstrom (L) im Gegenstrom geführt sind.

3. Vorrichtung nach Anspruch 1 oder 2, **dadurch gekennzeichnet, dass** die mindestens zwei Heizkörper (2, 3; 11, 12) durch eine Überströmleitung oder ein Überströmrohr (8, 13) kühlmittelseitig verbunden sind.

4. Vorrichtung nach Anspruch 3, **dadurch gekennzeichnet, dass** das Überströmrohr (8, 13) einen variablen Durchtrittsquerschnitt für das Kühlmittel aufweist.

5. Vorrichtung nach einem der vorhergehenden Ansprüche, **dadurch gekennzeichnet, dass** die Heizkörper (2, 3; 11, 12; 33, 34) gleich oder unterschiedlich ausgebildet sind.

6. Vorrichtung nach einem der Ansprüche 3 bis 5, **dadurch gekennzeichnet, dass** das Überströmrohr (8, 13) die austrittsseitigen und die eintrittsseitigen Kühlmittelkästen (2c, 3c; 11a, 12a) verbindet.

7. Vorrichtung nach einem der vorhergehenden Ansprüche, **dadurch gekennzeichnet, dass** die Heizkörper (2, 3; 11, 12; 21, 22; 30, 31; 33, 34) benachbart zueinander angeordnet sind.

8. Vorrichtung nach einem der Ansprüche 1 bis 6, **dadurch gekennzeichnet, dass** die Heizkörper (24, 25; 27, 28; 36, 37) in unterschiedlichen Positionen und/oder beabstandet und/oder in unterschiedlichen Einbaulagen angeordnet sind.

9. Vorrichtung nach einem der vorhergehenden Ansprüche, **dadurch gekennzeichnet, dass** die Heizkörper (24, 25; 29, 31) bezüglich ihrer Wärmeübertragungsleistung (Rippendichte, Bautiefe, Rohrteilung, Stirnfläche) unterschiedlich ausgelegt sind.

10. Vorrichtung nach einem der vorhergehenden Ansprüche, **dadurch gekennzeichnet, dass** die Heizkörper (2, 3; 11, 12) jeweils zwei Reihen von Flachrohren aufweisen.

11. Vorrichtung nach Anspruch 10, **dadurch gekennzeichnet, dass** die Flachrohre als Zweikammerrohre ausgebildet sind.

12. Vorrichtung nach Anspruch 10 oder 11, **dadurch gekennzeichnet, dass** zwischen den Flachrohren Wellrippen angeordnet sind.

13. Vorrichtung nach einem der vorhergehenden Ansprüche, **dadurch gekennzeichnet, dass** die Heizkörper aus Aluminiumwerkstoffen hergestellt und gelötet sind.

## Claims

1. A device for heating the interior of a motor vehicle comprising an internal combustion engine, the device having at least one radiator which is arranged in a heating or air conditioning system and through which coolant of the internal combustion engine can flow on the primacy side and air can flow on the secondary side, two radiators (1, 10, 20, 23, 26, 29, 32, 35, 38) being connected in series on the coolant side and air side, the two radiators (2, 3; 11, 12) comprising a tube-fin block (2a, 3a) and coolant tanks (2b, 2c, 3b, 3c), the radiators comprising an upper and a lower coolant tank, **characterized in that** a longitudinal separating wall is provided in the upper coolant box, so that four rows of flow ducts are formed and triple deflection of the coolant occurs counter to the air flow direction between the coolant inlet and the coolant outlet.

2. The device according to claim 1, **characterized in that** the coolant flow (E, A) and the air flow (L) are conducted as counter flows to each other.

3. The device according to claim 1 or 2, **characterized in that** the at least two radiators (2, 3; 11, 12) are connected to each other on the coolant side via an overflow line or an overflow pipe (8, 13).

4. The device according to claim 3, **characterized in that** the overflow pipe (8, 13) has a variable cross-section for the coolant.

5. A device according to any one of the preceding claims, **characterized in that** the radiators (2, 3; 11, 12; 33, 34) have identical or different designs.

6. A device according to any one of claims 3 to 5, **characterized in that** the overflow pipe (8, 13) connects the outlet-side and inlet-side coolant tanks (2c, 3c; 11a, 12a) to each other.

7. A device according to any one of the preceding claims, **characterized in that** the radiators (2, 3; 11, 12; 21, 22; 301, 31; 33, 34) are arranged adjacent to each other.

8. A device according to any one of claims 1 to 6, **characterized in that** the radiators (24, 25; 27, 28; 36, 37) are arranged in different position and/or spaced from each other and/or in different installation positions.

9. A device according to any one of the preceding claims, **characterized in that** the radiators (24, 25; 29, 31) have different designs with regard to the heat transfer capacities thereof (fin density, construction depth, tube pitch, end face).

10. A device according to any one of the preceding claims, **characterized in that** the radiators (2, 3; 11, 12) have two rows of flat tubes, respectively.

11. The device according to claim 10, **characterized in that** the flat tubes are designed as two-chamber tubes.

12. The device according to claim 10 or 11, **characterized in that** corrugated fins are arranged between the flat tubes.

13. A device according to any one of the preceding claims, **characterized in that** the radiators are produced from aluminum materials and are soldered.

## Revendications

1. Dispositif de chauffage de l'habitacle d'un véhicule automobile présentant un moteur à combustion interne, où le dispositif présente au moins un radiateur disposé dans un système de chauffage ou de climatisation et pouvant être traversé, côté primaire, par le liquide de refroidissement du moteur à combustion interne et, côté secondaire, par de l'air, où deux radiateurs (1, 10, 20, 23, 26, 29, 32, 35, 38) sont montés l'un derrière l'autre côté liquide de refroidissement et côté air, où les deux radiateurs (2, 3 ; 11, 12) présentant un bloc (2a, 3a) de tubes et d'ailettes, et des boîtes à eau (2b, 2c, 3b, 3c), et où les radiateurs présentent une boîte à eau supérieure et une boîte à eau inférieure, **caractérisé en ce qu'**il est prévu à chaque fois, dans la boite à eau supérieure, une paroi de séparation longitudinale, de sorte que sont formées quatre rangées de conduits d'écoulement, et un triple retour de flux du liquide de refroidissement se produit dans le sens inverse de la direction d'écoulement d'air, entre l'entrée du liquide de refroidissement et la sortie du liquide de refroidissement.

2. Dispositif selon la revendication 1, **caractérisé en ce que** le flux de liquide de refroidissement (E, A) et le flux d'air (L) sont guidés dans des flux opposés.

3. Dispositif selon la revendication 1 ou 2, **caractérisé en ce que** les radiateurs (2, 3 ; 11, 12) au moins au nombre de deux sont reliés, côté liquide de refroidissement, par une conduite de trop-plein ou un tube de trop-plein (8, 13).

4. Dispositif selon la revendication 3, **caractérisé en ce que** le tube de trop-plein (8, 13) présente une section de passage variable pour le liquide de refroidissement.

5. Dispositif selon l'une quelconque des revendications précédentes, **caractérisé en ce que** les radiateurs (2, 3; 11, 12 ; 33, 34) sont configurés de la même façon ou de façon différente.

6. Dispositif selon l'une quelconque des revendications 3 à 5, **caractérisé en ce que** le tube de trop-plein (8, 13) relie les boîtes à eau (2c, 3c ; 11a, 12a) placées côté sortie et côté entrée.

7. Dispositif selon l'une quelconque des revendication précédentes, **caractérisé en ce que** les radiateurs (2, 3 ; 11, 12 ; 21, 22 ; 30, 31 ; 33, 34) sont disposés en étant contigus les uns aux autres.

8. Dispositif selon l'une quelconque des revendications 1 à 6, **caractérisé en ce que** les radiateurs (24, 25 ; 27, 28 ; 36, 37) sont disposés dans des positrons différentes et / ou en étant espacés et / ou dans des positions de montage différentes.

9. Dispositif selon l'une quelconque des revendications précédentes, **caractérisé en ce que** les radiateurs (24, 25 ; 29, 31) sont dimensionnés de façon différente, en ce qui concerne leur rapacité de transmission de chaleur (densité des ailettes, profondeur de constriction, répartition des tubes, surface frontale).

10. Dispositif selon l'une quelconque des revendications précédentes, **caractérisé en ce que** les radiateurs (2, 3 ; 11, 12) présentent à chaque fois deux rangées de tubes plats.

11. Dispositif selon la revendication 10, **caractérisé en ce que** les tubes plats sont configurés comme des tubes à deux chambres.

12. Dispositif selon la revendication 10 ou 11, **caractérisé en ce que** des ailettes ondulées sont disposées entre les tubes plats.

13. Dispositif selon l'une quelconque des revendications précédentes, **caractérisé en ce que** les radiateurs sont fabriqués et brasés dans des matériaux comme l'aluminium.
